# EUROPEAN PATENT SPECIFICATION

(11) **EP 2 878 395 B1**
(45) Date of publication and mention of the grant of the patent: **25.05.2016**
(21) Application number: 14194375.3
(22) Date of filing: 21.11.2014
(51) Int. Cl.: B21D 39/03, F16B 5/00, F16B 17/00

(54) **Swage fastening structure, fastening part structure, and image forming apparatus**
Gesenkbefestigungsstruktur, Gesenkteilstruktur und Bilderzeugungsvorrichtung
Structure de fixation par sertissage, structure d'une partie de fixation et appareil de formation d'image

(30) Priority: 28.11.2013 JP 2013245973
(43) Date of publication of application: 03.06.2015
(73) Proprietor: Ricoh Company, Ltd., Tokyo 143-8555 (JP)
(72) Inventor: Kanayama, Yuuzoh, Ohta-ku,, Tokyo 143-8555 (JP); Kurihara, Hirokazu, Ohta-ku,, Tokyo 143-8555 (JP); Maeda, Taiki, Ohta-ku,, Tokyo 143-8555 (JP); Tanaka, Shinichi, Ohta-ku,, Tokyo 143-8555 (JP)
(74) Representative: Leeming, John Gerard

(56) References cited:
- DE-A1- 1 625 462
- DE-A1-102009 024 446
- DE-A1-102010 054 183
- FR-A- 1 500 021
- JP-A- H02 241 629

## Description

The present invention relates to a swage fastening structure, according to the preamble of claim 1 and to an image forming apparatus.

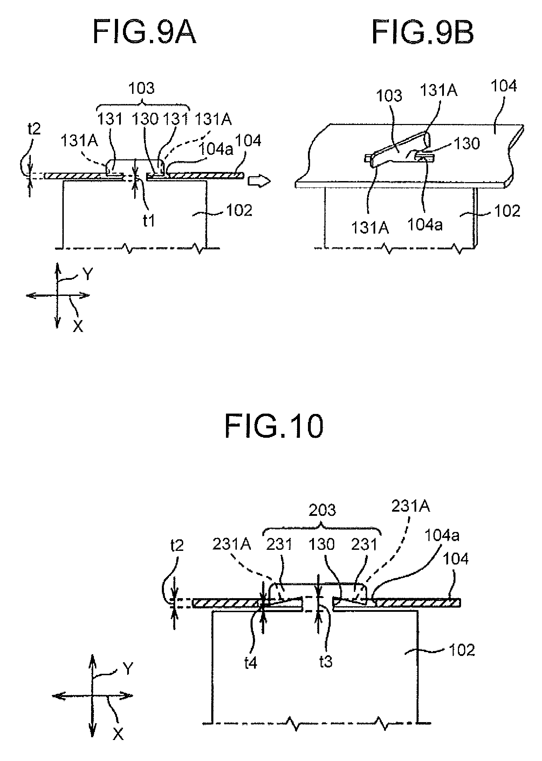

Japanese Patent Application Laid-open No. H2-241629 discloses a swage fixing structure for fixing an attaching member to a supporting member. FIG. 9A and FIG. 9B are views showing how the attaching member is fixed to the supporting member; FIG. 9A is a diagram showing a state where a swaging piece of the attaching member has passed through an attachment hole of the supporting member, and FIG. 9B is a diagram showing a state where the attaching member has fixed to the supporting member. FIG. 10 is a plane view showing another example of the swaging piece shown in FIGS. 9A and 9B.

The swage fixing structure disclosed in Japanese Patent Application Laid-open No. H2-241629 includes a plate-like attaching member 102 with a T-shaped swaging piece 103 and a supporting member 104 with an attachment hole 104a through which the swaging piece 103 passes. In a state where the swaging piece 103 passes through the attachment hole 104a, the swaging piece 103 is subjected to a twisting process, thereby the attaching member 102 is fixed to the supporting member 104.

As shown in FIG. 9A, the swaging piece 103 includes an integrated combination of a shaft portion 130 and a pair of wings 131; the shaft portion 130 is formed to project from the attaching member 102 in a direction extending along the plane of the attaching member 102. The shaft portion 130 is formed to project upward (in a direction of arrow Y) from the attaching member 102. The pair of wings 131 is formed to project in a direction perpendicular to the upward direction among directions extending along the plane of the attaching member 102 (in a direction of arrow X) from the shaft portion 130. Incidentally, the pair of wings 131 projects in the direction perpendicular to the upward direction among directions extending along the plane of the attaching member 102 (in the direction of arrow X) before the twisting process is performed. The "twisting process" here means to twist the shaft portion 130 about the shaft portion 130, thereby both wing lower ends 131A of the swaging piece 103 are in sliding contact with the supporting member 104 and plastically deformed, and formed into swage-fixed parts 131A.

The both wings 131 are formed so that a distance t1 between each wing 131 and the attaching member 102 is constant over the entire length of the wings 131 and also so that the distance t1 is shorter than a plate thickness t2 of the supporting member 104.

In such a conventional swage fixing structure, when the attaching member 102 is fixed to the supporting member 104 in a state where the swaging piece 103 passes through the attachment hole 104a of the supporting member 104, the shaft portion 130 is twisted about the shaft portion 130. Then, the both wing lower ends 131A of the swaging piece 103 run onto the surface of the supporting member 104 from the attachment hole 104a. As a result, the both wing lower ends 131A of the swaging piece 103 are plastically deformed. Accordingly, the both wing lower ends 131A are bent while exerting fastening force and formed into swage-fixed parts 131A, and the attaching member 102 is swaged and fixed to the supporting member 104.

Furthermore, as another example of the swaging piece 103 shown in FIGS. 9A and 9B, a swaging piece shown in FIG. 10 is disclosed in Japanese Patent Application Laid-open No. H2-241629. In the example shown in FIG. 10, a swaging piece 203 is configured so that the lower end surface of each wing 231 is inclined in such a direction that the wing 231 gradually gets closer to the attaching member 102 from one end close to the shaft portion 130 to the other end thereof. The both wings 231 are formed so that a distance t3 between the one end of each wing 231 close to the shaft portion 130 and the attaching member 102 is longer than the plate thickness t2 of the supporting member 104 and also so that a distance t4 between the other end of the wing 231 and the attaching member 102 is shorter than the plate thickness t2 of the supporting member 104.

However, in the conventional swage fixing structure, the swaging piece 103 is formed so that the distance t1 between the wings 131 and the attaching member 102 is constant over the entire length of the wings 231 as shown in FIG. 9A. Therefore, the both wings 131 are in sliding contact with the surface of the supporting member 104 over the entire length of the wings 131. That is, in the conventional swage fixing structure, an area of contact between the lower ends 131A of the both wings 131 and the supporting member 104 is large; therefore, great force is required to rotate the shaft portion 130, so the workability is poor. Furthermore, the swaging piece 203 is configured so that the lower end surface of each wing 231 is inclined in such a direction that the wing 231 gradually gets closer to the attaching member 102 from one end close to the shaft portion 130 to the other end thereof. Therefore, an area of contact between lower ends 231A of the both wings 231 and the supporting member 104 can be reduced. Accordingly, force to rotate the shaft portion 130 can be reduced; however, in accordance with the rotation of the shaft portion 130, only the other ends (tips) of the both wings 231 of the swaging piece 203 are plastically deformed. That is, swage-fixed parts 231A are formed in the position away from the shaft portion 130 (at the tips of the both wings 231); therefore, the attaching member 102 swaged with the supporting member 104 may have a backlash.

DE 10 2010 054 183 A1 discloses a structure having a slot-shaped opening located along a longitudinal axis. A metal sheet is provided along an edge portion corresponding to the slot-shaped opening. A projection structure is inserted into the slot-shaped opening and is set to project from the edge portion toward a vertical axis. The slot-shaped opening is provided with a flare portion which extends transverse to the longitudinal axis through a basic contour portion of the slot-shaped opening.

In view of the above, and there is a need to provide a swage fastening structure, fastening part structure, and image forming apparatus capable of fastening plate members by swaging a swaging piece with respect to a fastening hole with high positional accuracy and high fastening force without causing a backlash while improving workability.

### SUMMARY OF THE INVENTION

It is an object of the present invention to at least partially solve the problems in the conventional technology.

The present invention provides a swage fastening structure and an image forming apparatus as defined in claims 1 and 5 respectively.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a perspective view showing a swage fastening structure according to a first embodiment of the present invention;
FIG. 2 is a plane view showing a first plate member composing the swage fastening structure shown in FIG. 1;
FIG. 3 is a diagram for explaining a dimensional relationship between the first plate member shown in FIG. 2 and a second plate member;
FIG. 4 is a plane view showing the second plate member with a fastening hole composing the swage fastening structure shown in FIG. 1;
FIG. 5A is a plane view showing a state where a swaging piece has passed through the fastening hole, and FIG. 5B is a perspective view of FIG. 5A;
FIG. 6A is a perspective view showing a completed state of the swage fastening structure shown in FIG. 1, FIG. 6B is a plane view of the swage fastening structure shown in FIG. 6A, and FIG. 6C is a cross-sectional view of the swage fastening structure along the line I-I shown in FIG. 6A;
FIG. 7 is a plane view showing a second plate member composing a swage fastening structure according to a first example not forming part of the present invention;
FIG. 8 is a schematic diagram of an image forming apparatus with the swage fastening structure according to the present invention in which a part of the exterior is omitted;
FIGS. 9A and 9B are diagrams showing a conventional swage fixing structure; FIG. 9A is a plane view showing a state where a swaging piece has passed through an attachment hole of a supporting member, and FIG. 9B is a perspective view showing a state where an attaching member has fixed to the supporting member; and
FIG. 10 is a plane view showing another example of the swaging piece shown in FIG. 9A and FIG. 9B.

### DETAILED DESCRIPTION OF THE PREFERRED EMBODIMENTS

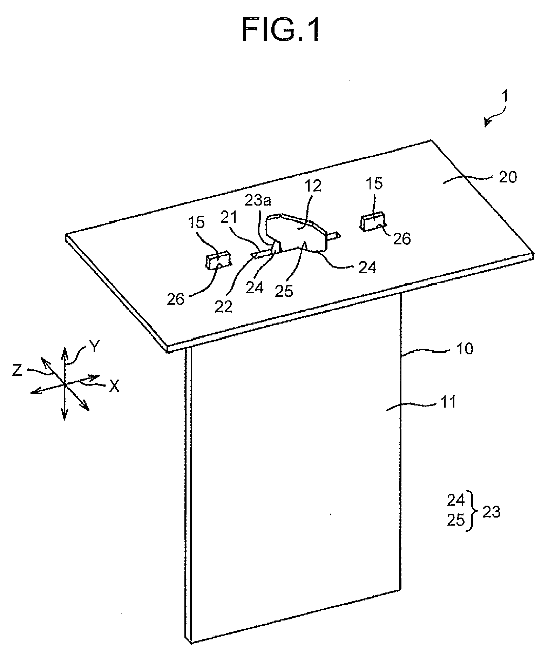

A swage fastening structure according to a first embodiment of the present invention is explained on the basis of FIGS. 1 to 6. A swage fastening structure 1 shown in FIG. 1 is a structure including a first plate member 10 and a second plate member 20, and is structured to fasten the first and second plate members 10 and 20. The first plate member 10 includes a plate main body 11 and a T-shaped swaging piece 12 formed to project from the plate main body 11 in a direction extending along the plane of the plate main body 11 that are formed by punching a metal plate. The second plate member 20 has a fastening hole 21 through which the swaging piece 12 passes. The swage fastening structure 1 has a structure that in a state where the swaging piece 12 has passed through the fastening hole 21, the swaging piece 12 is twisted about a shaft portion 13 so that the shaft portion 13 is plastically deformed, thereby the swaging piece 12 is swaged with respect to the fastening hole 21, and the first plate member 10 and the second plate member 20 are fastened. Incidentally, the first plate member 10 before the twisting about the shaft portion 13 corresponds to "one of a pair of plate members" in claims, and the second plate member 20 corresponds to "the other one of the pair of plate members" in claims. Furthermore, the pair of plate members 10 and 20 composes a "fastening part structure" in claims.

Here, the direction in which the swaging piece 12 projects from the plate main body 11 among directions extending along the plane of the plate main body 11 is indicated by an arrow Y; a direction perpendicular to (intersecting) the direction of the arrow Y among directions extending along the plane of the plate main body 11 is indicated by an arrow X; a thickness direction of the plate main body 11 is indicated by an arrow Z. Furthermore, in the present application, a direction of the arrow Y is sometimes referred to as a vertical direction; a direction of the arrow X is sometimes referred to as a left-right direction; a direction of the arrow Z is sometimes referred to as a front-back direction. Incidentally, out of the vertical direction, the upper side of the paper plane in FIG. 1 is sometimes referred to as "up", and the lower side of the paper plane in FIG. 1 is sometimes referred to as "down".

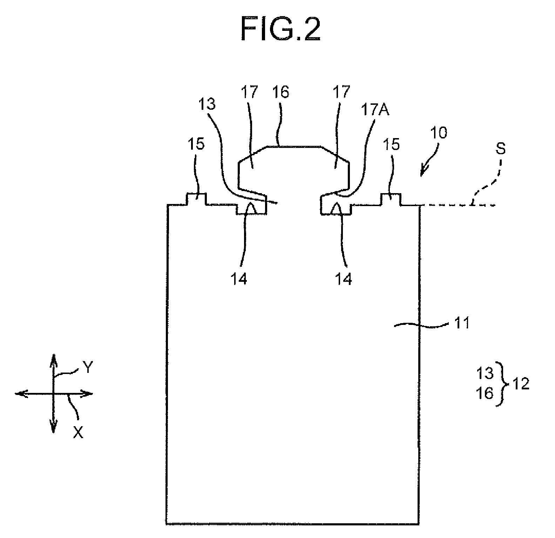

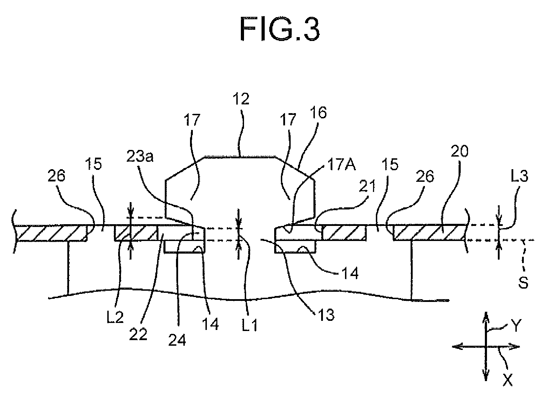

As shown in FIG. 2, the plate main body 11 is provided with a pair of recessed cutouts 14 and a pair of projecting pieces 15; the pair of recessed cutouts 14 is formed by cutting out portions of the upper end of the plate main body 11, and the pair of projecting pieces 15 is formed to project from the upper end of the plate main body 11 in the upward direction among directions extending along the plane of the plate main body 11. The pair of recessed cutouts 14 is formed at the base of the swaging piece 12 on the plate main body 11, i.e., at both sides of the shaft portion 13 to be described later. The pair of projecting pieces 15 is formed to have a dimension in a projecting direction larger than a plate thickness L3 (see FIG. 3) of the second plate member 20. In a state where the pair of projecting pieces 15 has been fitted into a pair of projecting-piece fitting holes 26, the tips of the projecting piece 15 project from the top surface of the second plate member 20. Here, the pair of recessed cutouts 14 is formed to be recessed downward from a reference position S of the plate main body 11, and the pair of projecting pieces 15 is formed to protrude upward from the reference position S of the plate main body 11. The projecting pieces 15 are formed to project in the same direction as the swaging piece 12 (upward).

The swaging piece 12 is composed of the shaft portion 13 and a grip portion 16; the shaft portion 13 is formed to project from the plate main body 11 in the upward direction among directions extending along the plane of the plate main body 11, and the grip portion 16 is formed at the upper part of the shaft portion 13 (at the part away from the plate main body 11) to be continuous with the shaft portion 13 and is gripped with a tool such as pliers when the shaft portion 13 is twisted. The grip portion 16 is formed so as to extend along the plane of the plate main body 11 before the shaft portion 13 is twisted about the shaft portion 13 and so that the dimension of the grip portion 16 in a left-right direction (the direction of the arrow X) is larger than the width of the shaft portion 13 in the left-right direction.

On both left and right ends of the grip portion 16, a pair of holding pieces 17 is formed to hold the second plate member 20 between the plate main body 11 and the holding pieces 17 when the shaft portion 13 has been twisted. The pair of holding pieces 17 is formed to project in the left-right direction (in an intersecting direction) from the both sides of the shaft portion 13 before being twisted. That is, before the shaft portion 13 is twisted, the second plate member 20 is not held between the plate main body 11 and the holding pieces 17. Furthermore, the pair of holding pieces 17 is configured so that the lower end surface of each holding piece 17 close to the plate main body 11 is inclined in a direction of gradually getting away from the plate main body 11 (upward) from one end close to the shaft portion 13 to the other end thereof. Hereinafter, the lower end surface of the holding piece 17 is referred to as an inclined surface 17A.

As shown in FIG. 3, the swaging piece 12 is formed so that a first dimension L1 between the reference position S of the plate main body 11 and one end (a lower end) of the inclined surface 17A close to the shaft portion 13 is smaller than the plate thickness L3 of the second plate member 20 and also so that a second dimension L2 between the reference position S of the plate main body 11 and the other end (an upper end away from the shaft portion 13) of the inclined surface 17A is larger than the plate thickness L3 of the second plate member 20 (L1<L3<L2).

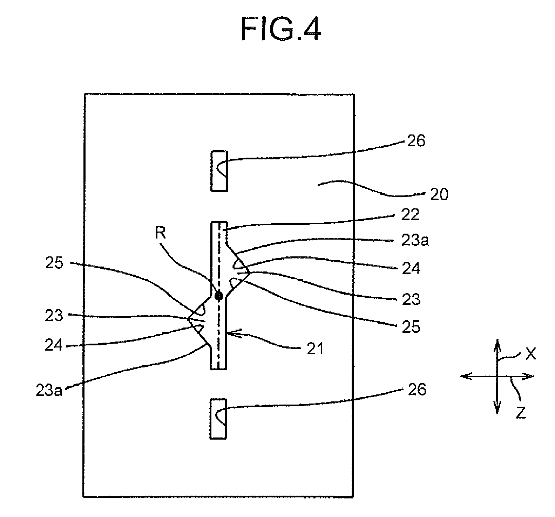

As shown in FIG. 4, the second plate member 20 is composed of a rectangular metal plate having the plate thickness being about the same as the first plate member 10 and being constant. The second plate member 20 is fastened to the first plate member 10 in a manner in which the swaging piece 12 of the first plate member 10 passes through the fastening hole 21. That is, as shown in FIGS. 1 and 3, the second plate member 20 is fastened to the first plate member 10 so that the thickness direction of the second plate member 20 is parallel to the direction in which the swaging piece 12 of the first plate member 10 projects (the direction of the arrow Y). Incidentally, in FIG. 4, the second plate member 20 is set so that a long side of the second plate member 20 extends along the direction of the arrow X and the width direction is parallel to the direction of the arrow Z.

The fastening hole 21 includes a slit-like grip-portion through hole 22 through which the grip portion 16 passes and a pair of triangular holes 23 (a continuous hole) continuous with both sides of the grip-portion through hole 22 in the direction of the arrow Z on the middle part of the grip-portion through hole 22 in a slit extending direction (the direction of the arrow X). The grip-portion through hole 22 is formed into a slit continuous in the direction of the arrow X when viewed from the top. The grip-portion through hole 22 is formed so that a longitudinal dimension is slightly larger than the maximum dimension of the grip portion 16 in the left-right direction and also so that a width (in the direction of the arrow Z) is slightly larger than a plate thickness of the first plate member 10.

The triangular holes 23 are formed at both sides of the grip-portion through hole 22 in the direction of the arrow Z to be shifted in the direction of the arrow X, and are positioned to be symmetrical about a center R (see FIG. 4) of the grip-portion through hole 22 viewed from the above. The center R of the grip-portion through hole 22 and the rotation center of the shaft portion 13 in a state where the swaging piece 12 has passed through the fastening hole 21 are in the same position. Furthermore, on the middle part of the grip-portion through hole 22 in the longitudinal direction (the direction of the arrow X) (near the center R of the grip-portion through hole 22), the pair of triangular holes 23 is formed to project from the grip-portion through hole 22 in a clockwise direction viewed from the above, which is the same direction as the twisting direction of the shaft portion 13. The pair of triangular holes 23 allows the shaft portion 13 to rotate inside thereof.

Each of the triangular holes 23 is formed into a triangular shape viewed from the above, and also formed to have a size including an area of rotation trajectory when the shaft portion 13 is rotated by a predetermined angle. Each of the triangular holes 23 has a first flat surface 24 and a second flat surface 25 (a contact portion); an upper edge 23a (a sliding contact portion) of the first flat surface 24 is in sliding contact with the inclined surface 17A of the holding piece 17 when the shaft portion 13 rotates, and the second flat surface 25 comes in contact with the surface of the holding piece 17 when the shaft portion 13 has been rotated by the predetermined angle. A pair of the first flat surfaces 24 is formed so that a distance between them is slightly larger than the width of the shaft portion 13 before being twisted. That is, the pair of first flat surfaces 24 is formed so that a distance between respective upper edges 23a is slightly larger than the width of the shaft portion 13 before being twisted. The upper edge 23a of the first flat surface 24 here is a portion of the edge (periphery) of the fastening hole 21 in the projecting direction located at the boundary of the first flat surface 24 and the surface of the second plate member 20 in the projecting direction (in the direction of the arrow Y). Then, the upper edge 23a is formed into a straight line intersecting the longitudinal direction of the grip-portion through hole 22 (the direction of the arrow X), and at least part of the upper edge 23a is in sliding contact with the inclined surface 17A of the holding piece 17 when the shaft portion 13 rotates.

Furthermore, the second plate member 20 is provided with the pair of projecting-piece fitting holes 26 into which the pair of projecting pieces 15 of the first plate member 10 is fitted; the projecting-piece fitting holes 26 are formed at both sides of the fastening hole 21 in the direction of the arrow X. The projecting-piece fitting holes 26 are formed to pass through the second plate member 20. The pair of projecting-piece fitting holes 26 is formed to be separated from the fastening hole 21 in the direction of the arrow X. Each of the projecting-piece fitting holes 26 is formed into a slit, and is formed so that a longitudinal dimension (in the direction of the arrow X) is slightly larger than a dimension of the projecting piece 15 in the left-right direction and also so that a width (in the direction of the arrow Z) is slightly larger than the plate thickness of the first plate member 10.

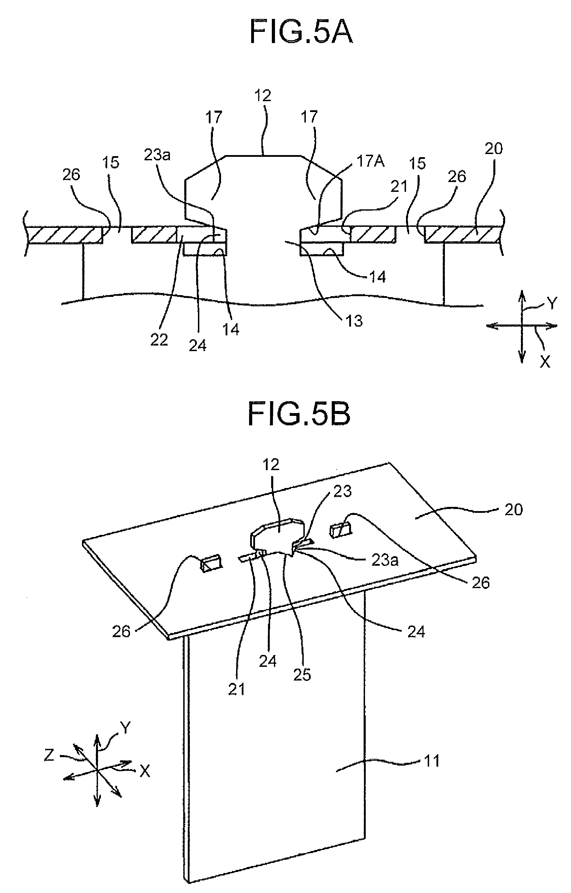

Subsequently, a procedure for assembly of the swage fastening structure 1 according to the first embodiment is explained with reference to FIGS. 5A to 6C.

First, as shown in FIGS. 5A and 5B, the swaging piece 12 is inserted into the fastening hole 21 to fit the pair of projecting pieces 15 into the pair of projecting-piece fitting holes 26. In this state, the grip portion 16 of the swaging piece 12 projecting from the second plate member 20 is gripped with a tool such as pliers, and is twisted clockwise viewed from the above.

Here, the shaft portion 13 is twisted in a state where the projecting pieces 15 have been fitted into the projecting-piece fitting holes 26; however, the projecting pieces 15 are in contact with the edges of the projecting-piece fitting holes 26, so that the plate main body 11 is prevented from moving along with the twisting of the shaft portion 13. In this way, the shaft portion 13 is twisted in a state where the rotation center is stable. Furthermore, the fastening hole 21 is provided with the pair of triangular holes 23, so that it is possible to secure a rotating space for the shaft portion 13 to rotate. Accordingly, an angle of twisting of the shaft portion 13 can be increased as compared with the case where the fastening hole 21 is not provided with the pair of triangular holes 23. Furthermore, when the shaft portion 13 has been twisted, the shaft portion 13 is plastically deformed from the base thereof; therefore, a plastically-deformed portion of the shaft portion 13 can be made long in the vertical direction (the direction of the arrow Y). By making a plastically-deformed portion of the shaft portion 13 long in this way, the shaft portion 13 can be twisted with low force, and also fracture of the shaft portion 13 can be made unlikely to occur.

In accordance with the further twisting of the shaft portion 13, the inclined surface 17A is twisted while being in sliding contact with the upper edge 23a of the first flat surface 24 of each triangular hole 23. With this, while holding the second plate member 20 between the holding piece 17 and the plate main body 11, the holding piece 17 pushes the second plate member 20 downward toward the plate main body 11 along the inclination of the inclined surface 17A. Furthermore, the swaging piece 12 is positioned while being moved toward the center R of the grip-portion through hole 22 along the inclined surface 17A of the holding piece 17.

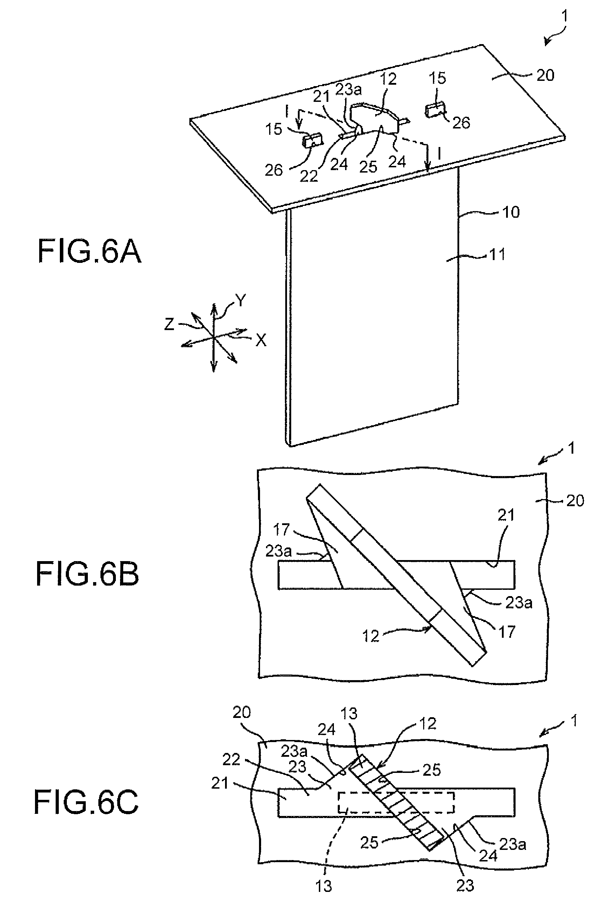

In accordance with the still further twisting of the shaft portion 13, the twisting of the shaft portion 13 is stopped when the surface of the holding piece 17 has come in contact with the second flat surface 25 of the triangular hole 23 at the position where the shaft portion 13 has been twisted by the predetermined angle. That is, while the holding piece 17 is pushing the second plate member 20 downward toward the plate main body 11, the lower end of the holding piece 17 comes in contact with the second flat surface 25 of the triangular hole 23. Then, as shown in FIGS. 6A, 6B, and 6C, the pair of holding pieces 17 and the plate main body 11 hold the second plate member 20 therebetween. In this way, the swaging piece 12 is swaged with respect to the fastening hole 21, and the first plate member 10 and the second plate member 20 are fastened, and then the swage fastening structure 1 is completed.

Subsequently, the action and effects of the first embodiment are explained. The pair of holding pieces 17 is configured so that the end surface (the inclined surface 17A) of each holding piece 17 close to the plate main body 11 is inclined in a direction of gradually getting away from the plate main body 11 from one end close to the shaft portion 13 to the other end thereof. Furthermore, the swaging piece 12 is formed so that the dimension L1 between the plate main body 11 and one end of the end surface close to the shaft portion 13 is smaller than the plate thickness L3 of the second plate member 20 and also so that the dimension L2 between the plate main body 11 and the other end of the end surface is larger than the plate thickness L3 of the second plate member 20. Consequently, when the swaging piece 12 is twisted about the shaft portion 13 in a state where the swaging piece 12 has passed through the fastening hole 21, out of the end surface of the holding piece 17 close to the plate main body 11, a portion close to the shaft portion 13 is in sliding contact with the edge of the fastening hole 21 (the upper edge 23a of each first flat surface 24). Therefore, while pushing the second plate member 20 downward toward the plate main body 11, the rotation center of the swaging piece 12 is moved toward the center of the fastening hole 21 along the inclination of the end surface of the holding piece 17, and the swaging piece 12 is positioned. Furthermore, the position of the end surface of the holding piece 17 at which the holding piece 17 and the second plate member 20 contact can be made close to the shaft portion 13, and an area of contact between the holding piece 17 and the second plate member 20 when the shaft portion 13 is twisted can be reduced. That is, force required to twist the shaft portion 13 can be reduced. Therefore, it is possible to swage the swaging piece 12 with respect to the fastening hole 21 with high positional accuracy and high fastening force without causing a backlash while improving workability.

Moreover, the pair of holding pieces 17 is configured so that the end surface of each holding piece 17 close to the plate main body 11 is inclined in a direction of gradually getting away from the plate main body 11 from one end close to the shaft portion 13 to the other end thereof. Therefore, an allowable range in plate thickness of the second plate member 20 can be made large. Accordingly, the number of variations of swaging pieces 12 to be formed according to the plate thickness of the second plate member 20 can be reduced. That is, the number of manufacture of dies for molding the swaging pieces 12 can be reduced, and therefore it is possible to reduce the die machining cost. Furthermore, at the time of swage fastening work, plate members can be fastened only by performing torque management when the shaft portion 13 is twisted. That is, the swage fastening work can be performed not in the manufacturing facility but on the assembling site; therefore, compactness more than a completed product is achieved, so that it is possible to eliminate the waste of space for transportation and storage, and also possible to reduce costs for transportation and storage. Moreover, work of fastening plate members can be performed with only a universal fastening tool without requiring other members such as screws in the fastening work; therefore, it is possible to reduce costs for parts such as screws and costs for purchasing new jigs. That is, it is possible to achieve the cost reduction.

Furthermore, the triangular holes 23 (a continuous hole) of the fastening hole 21 each have the second flat surface 25 (a contact portion) to be in contact with the holding piece 17; therefore, the surface of the holding piece 17 comes in contact with the second flat surface 25 of the triangular hole 23 at the position where the shaft portion 13 has been twisted by a given angle. In this state, the swaging piece 12 is swaged with respect to the fastening hole 21. That is, in a state where the swaging piece 12 has been swaged with respect to the fastening hole 21, an area of contact between the shaft portion 13 and the triangular hole 23 is increased. Therefore, the swaging piece 12 can be swaged with respect to the fastening hole 21 with high fastening force.

Moreover, the plate main body 11 is provided with the pair of recessed cutouts 14 formed by cutting out portions of the plate main body 11 at both sides of the shaft portion 13. For example, when the plate thickness of the second plate member 20 is small, the shaft portion 13 has to be formed so as to reduce the vertical dimension of the shaft portion 13 according to the plate thickness of the second plate member 20. Therefore, a die (not shown) for forming the first plate member 10 also has to be formed so as to reduce the vertical dimension of a portion for forming the shaft portion 13, and thereby the portion for forming the shaft portion 13 may be too small to secure the strength of the die. Here, if a relatively-small completed part is formed from a metal plate, for example, the laser cutting process is effective; however, this processing method may be inferior to the press working in mass productivity and processing cost. Therefore, in the present embodiment, the pair of recessed cutouts 14 is formed on the plate main body 11 by cutting out portions of the plate main body 11 at the both sides of the shaft portion 13 so that the vertical dimension of the shaft portion 13 is increased. Accordingly, a die for forming the first plate member 10 is formed so as to increase the vertical dimension of a portion for forming the shaft portion 13, and thereby the vertical dimension of the portion of the die for forming the shaft portion 13 can be secured. Therefore, it is possible to secure the strength of the die, and also possible to use the die over a long period of time.

Furthermore, when the plate thickness of the second plate member 20 is small, the shaft portion 13 has to be formed so as to reduce the vertical dimension of the shaft portion 13; therefore, the shaft portion 13 may not be able to secure the strength enough to withstand the twisting. However, portions of the plate main body 11 at both sides of the shaft portion 13 are cut out, thereby the base of the shaft portion 13 is located below the reference position S of the plate main body 11. Accordingly, the vertical dimension of the shaft portion 13 can be secured, so the shaft portion 13 can secure the strength enough to withstand the twisting. Therefore, even when the plate thickness of the second plate member 20 is small, the swaging piece 12 can be swaged with high positional accuracy and high fastening force without causing a backlash.

Moreover, the plate main body 11 is provided with the pair of recessed cutouts 14 formed by cutting out portions of the plate main body 11 at both sides of the shaft portion 13. For example, when the plate thickness of the second plate member 20 is small, the shaft portion 13 has to be formed so that the vertical dimension of the shaft portion 13 is also small; therefore, the shaft portion 13 may not be able to secure the strength enough to withstand the twisting. However, portions of the plate main body 11 at both sides of the shaft portion 13 are cut out, thereby the base of the shaft portion 13 is located below the reference position S of the plate main body 11. Accordingly, the vertical dimension of the shaft portion 13 can be secured, so the shaft portion 13 can secure the strength enough to withstand the twisting. Therefore, even when the plate thickness of the second plate member 20 is small, the swaging piece 12 can be swaged with high positional accuracy and high fastening force without causing a backlash.

In the first embodiment described above, each of the triangular holes 23 is formed into a triangular shape; however, the present invention is not limited to this. Each of the triangular holes 23 can be formed into a planar shape of a fan having the area being nearly equal to an area of rotation trajectory when the shaft portion 13 is rotated about the center R of the grip-portion through hole 22 by a given angle in a twisting direction of the grip-portion through hole 22 (in a clockwise direction viewed from the above). In this case, the first flat surface 24 can be formed of a surface curved in an arc. That is, the upper edge (a sliding contact portion) of the first flat surface 24 to be in sliding contact with the inclined surface 17A of the holding piece 17 can be formed of an arc-like curve.

Furthermore, in the first embodiment described above, the pair of projecting pieces 15 is installed at both sides of the swaging piece 12 in the left-right direction; however, a projecting piece 15 can be installed on either one side of the swaging piece 12, or two or more (multiple) projecting pieces 15 can be installed. Moreover, in the first embodiment described above, the pair of projecting pieces 15 is formed so that the dimension of the pair of projecting pieces 15 in the projecting direction is larger than the plate thickness L3 of the second plate member 20; however, the pair of projecting pieces 15 can be formed so that the dimension of each projecting piece 15 in the projecting direction is smaller than the plate thickness L3 of the second plate member 20. In this case, the pair of projecting-piece fitting holes 26 can be formed into a recessed surface on the undersurface of the second plate member 20.

Furthermore, in the first embodiment described above, the second plate member 20 having about the same thickness as the first plate member 10 is used; however, the present invention is not limited to this. The first plate member 10 and the second plate member 20 can differ from each other in thickness.

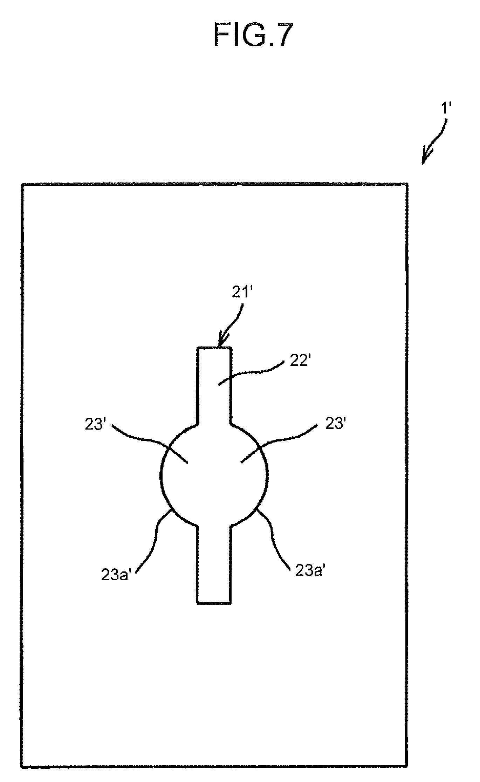

Subsequently, a first example not forming part of the present invention is explained on the basis of FIG. 7. A member having the same configuration and function as that described in the first embodiment is assigned the same reference numeral, and description of the member is omitted. In the present example, only points of difference from the swage fastening structure 1 in the first embodiment are explained. A swage fastening structure 1' according to the first example differs from the swage fastening structure 1 in the first embodiment only in the shape of a fastening hole 21'. Therefore, here explanation about the fastening hole 21' only is provided.

The fastening hole 21' includes a slit-like grip-portion through hole 22' through which the grip portion 16 passes and a pair of semicircular holes 23' (a continuous hole) continuous with both sides of the grip-portion through hole 22' in the direction of the arrow Z on the middle part of the grip-portion through hole 22' in a slit extending direction (the direction of the arrow X). The semicircular holes 23' are formed at both sides of the grip-portion through hole 22' in the direction of the arrow Z. That is, the semicircular holes 23' do not have a contact portion to be in contact with the surface of the holding piece 17 at the position where the shaft portion 13 has been twisted by a given angle.

The pair of semicircular holes 23' is formed so that the curvature thereof is equal to the curvature of a circle having a diameter slightly larger than the width of the shaft portion 13. An upper edge 23a' (a sliding contact portion) of each of the semicircular holes 23' is in sliding contact with the inclined surface 17A of the holding piece 17 when the shaft portion 13 is twisted.

However, as a continuous hole, the pair of triangular holes 23 in the first embodiment is more preferable than the pair of semicircular holes 23' in the first example because the triangular hole 23 has the second flat surface 25 (a contact portion) to be in contact with the holding piece 17. Furthermore, as each of the 17 triangular holes 23 in the first embodiment has the second flat surface 25 (a contact portion), the area of the pair of triangular holes 23 is smaller than that of the pair of semicircular holes 23' in the first example. Therefore, the pair of triangular holes 23 can contribute to the prevention of degradation in strength of the second plate member 20.

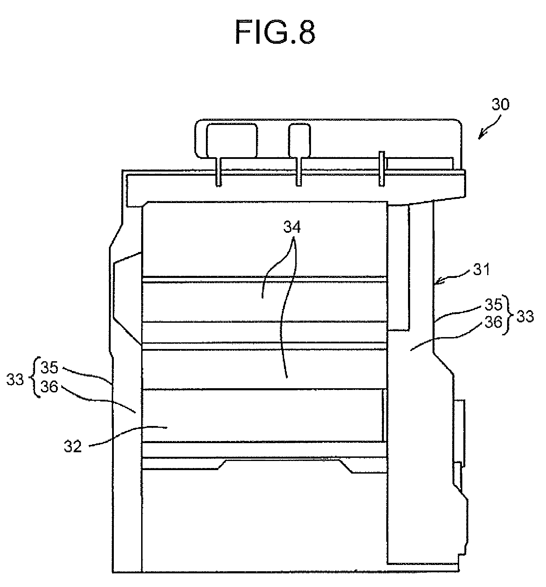

Subsequently, there is explained a form in which the swage fastening structure 1 according to the first embodiment of the present invention is incorporated into an image forming apparatus 30. FIG. 8 is a schematic diagram of the image forming apparatus in which a part of the exterior is omitted. As shown in FIG. 8, the image forming apparatus 30 includes an apparatus main body 31 composing the apparatus of the image forming apparatus 30 and a paper feed tray 32 which is drawably housed in the apparatus main body 31 and contains therein pieces of paper to be fed. The apparatus main body 31 includes a pair of opposed plates 33 opposed to each other and a plurality of connecting plates 34 for connecting the pair of opposed plates 33. Each of the opposed plates 33 is formed into a U shape by bending both ends thereof in a direction (a depth direction in FIG. 8) perpendicular to the direction in which the opposed plates 33 are opposed to each other (the left-right direction of the paper plane in FIG. 8) at a right angle. Then, bent portions 36 of each opposed plate 33 are opposed to each other in the depth direction in FIG. 8.

In such an image forming apparatus 30, the swage fastening structure 1 (not shown in FIG. 8) according to the first embodiment of the present invention is used to connect the pair of opposed plates 33 and the connecting plates 34. Specifically, the first plate member 10 composes each connecting plate 34, and the second plate member 20 composes the opposed-plate main body 35 of each opposed plate 33. Furthermore, each of the connecting plates 34 is provided with the swaging piece 12, and the fastening hole 21 is formed on the opposed-plate main body 35. Then, the swaging piece 12 is swaged with respect to the fastening hole 21, and the first plate member 10 (the connecting plate 34) and the second plate member 20 (the opposed plate 33) are fastened. Here, the second plate member 20 is fastened to the first plate member 10 so that the 18 thickness direction of the second plate member 20 is parallel to the direction in which the swaging piece 12 of the first plate member 10 projects. At this time, the bent portions 36 have an overlap with the connecting plates 34.

Incidentally, as the form in which the swage fastening structure 1 according to the first embodiment is incorporated into the image forming apparatus 30, a form in which the pair of opposed plates 33 and the connecting plates 34 are swaged is explained; however, the present invention is not limited to this. The swage fastening structure 1 according to the present invention can be used in any sites in the image forming apparatus 30 as long as the sites are a site for fastening plate members. Furthermore, the swage fastening structure 1 can be used for fastening plate members in any other devices and parts besides in the image forming apparatus 30.

The above-described embodiments are just examples of preferable forms of the present invention, and the present invention is not limited to these embodiments. In other words, those skilled in the art can make various modifications without departing from the scope of the invention. As long as the configuration of the swage fastening structure according to the present invention is achieved even after such a modification is made, the modified swage fastening structure obviously falls under the category of the present invention.

In a swage fastening structure according to an embodiment, a pair of holding pieces is configured so that an end surface of each holding piece close to a plate main body is inclined in a direction of gradually getting away from the plate main body from one end close to a shaft portion to the other end thereof. Furthermore, the pair of holding pieces is formed so that a dimension between the plate main body and one end of the end surface close to the shaft portion is smaller than a plate thickness of a second plate member and also so that a dimension between the plate main body and the other end of the end surface is larger than the plate thickness of the second plate member. Accordingly, when a swaging piece is twisted about the shaft portion in a state where the swaging piece has passed through a fastening hole, out of the end surface of each holding piece close to the plate main body, a portion close to the shaft portion is in sliding contact with the edge of the fastening hole. Therefore, while pushing the second plate member downward toward the plate main body, the rotation center of the swaging piece is moved toward the center of the fastening hole along the inclination of the end surface of the holding piece so that the swaging piece is positioned. Furthermore, the position of the end surface of the holding piece at which the holding piece and the second plate member contact can be made closer to the shaft portion as compared with the conventional technology in which a pair of holding pieces is configured so that an end surface of each holding piece is inclined in a direction of getting closer to a plate main body from one end close to a shaft portion to the other end thereof, and an area of contact between the holding piece and the second plate member when the shaft portion is twisted can be reduced. That is, force required to twist the shaft portion can be reduced. Therefore, it is possible to swage the swaging piece with respect to the fastening hole with high positional accuracy and high fastening force without causing a backlash while improving workability.

Furthermore, an allowable range in plate thickness of the second plate member can be expanded. Accordingly, the number of variations of swaging pieces to be formed according to the plate thickness of the second plate member can be reduced. That is, the number of manufacture of dies for molding the swaging pieces can be reduced, and therefore it is possible to reduce the die machining cost. Moreover, work of fastening plate members can be performed with only a universal fastening tool without requiring other members such as screws in the fastening work; therefore, it is possible to reduce costs for parts such as screws and costs for purchasing new jigs. That is, it is possible to achieve the cost reduction.

Although the invention has been described with respect to specific embodiments for a complete and clear disclosure, the appended claims are not to be thus limited but are to be construed as embodying all modifications and alternative constructions that may occur to one skilled in the art that fall within the scope of the appended claims.

## Claims

1. A swage fastening structure (1) comprising:
a first plate member (10); and
a second plate member (20), wherein
the first plate member (10) includes a plate main body (11) and a T-shaped swaging piece (12) formed to project from the plate main body (11) in a direction extending along a plane of the plate main body (11),
the second plate member (20) includes a fastening hole (21) through which the swaging piece (12) passes,
the swage fastening structure (1) fastens the first and second plate members (10, 20) by swaging the swaging piece (12) in a state where the swaging piece (12) has passed through the fastening hole (21),
the swaging piece (12) includes:
a shaft portion (13) projecting from the plate main body (11) in a projecting direction in which the swaging piece (12) projects; and
a pair of holding pieces (17) that is formed to be continuous with the shaft portion (13) at a part of the shaft portion (13) away from the plate main body (11) and to project from the shaft portion (13) in both intersecting directions intersecting the projecting direction, and holds the second plate member (20) between the plate main body (11) and thereof,
the pair of holding pieces (17) is configured such that an end surface of each holding piece close to the plate main body (11) is inclined in a direction of gradually getting away from the plate main body (11) from one end close to the shaft portion (13) to the other end thereof, and is formed such that a dimension between the plate main body (11) and one end of the end surface close to the shaft portion (13) is smaller than a plate thickness of the second plate member (20) and a dimension between the plate main body (11) and the other end of the end surface is larger than the plate thickness of the second plate member (20), whereby in a state where the swaging piece (17) has passed through the fastening hole (21), the shaft portion (13) is configured to be twisted about the shaft portion (13) so that the shaft portion (13) is plastically deformed, thereby the swaging piece (12) is swaged with respect to the fastening hole (21), and the first plate member (10) and the second plate member (20) are fastened, **characterized in that**
the fastening hole (21) includes:
a slit-like holding-piece through hole (22) through which the pair of holding pieces (17) is to pass; and
a continuous hole (23) that is formed to be continuous with the holding-piece through hole (22) and allows the shaft portion (13) to rotate inside thereof,
an edge of the continuous hole (23) is provided with a pair of sliding contact portions (23a) to be in sliding contact with respective end surfaces of the pair of holding pieces (17) when the shaft portion (13) is twisted,
the pair of sliding contact portions (23a) is formed such that a dimension between the pair of sliding contact portions (23a) is slightly larger than a dimension of the shaft portion in the intersecting directions, and
the continuous hole (23) is provided with contact portions (25) each being a flat surface to be in contact with surfaces of the holding pieces (17) at a position where the shaft portion (13) has been twisted by a predetermined angle.

2. The swage fastening structure (1) according to claim 1, wherein
the plate main body (11) is provided with a pair of recessed cutouts (14) formed by cutting out portions of the plate main body (11) at both sides of the shaft portion (13).

3. The swage fastening structure (1) according to claim 1 or claim 2, wherein
a plurality of projecting pieces (15) projecting in the same direction as the projecting direction of the swaging piece (12) is formed on the plate main body (11), and
a plurality of projecting-piece fitting holes (26) into which the plurality of projecting pieces (15) is fitted is formed on the second plate member (20).

4. The swage fastening structure (1) according to any of claims 1 to 3, wherein the continuous hole (23) is a pair of triangular holes that are shifted relative to each other in a slit extending direction of the holding-piece through hole (22) and are positioned to be symmetrical about a center of the holding-piece through hole (22) when viewed in a plan view.

5. An image forming apparatus (30) comprising the swage fastening structure (1) according to any one of claims 1 to 4.

## Patentansprüche

1. Gesenkbefestigungsstruktur (1), umfassend:
ein erstes Plattenelement (10) und
ein zweites Plattenelement (20), wobei
das erste Plattenelement (10) einen Plattenhauptkörper (11) und ein T-förmiges Gesenkstück (12) enthält, das so gebildet ist, dass es vom Plattenhauptkörper (11) in eine Richtung hervorsteht, die sich entlang einer Ebene des Plattenhauptkörpers (11) erstreckt,
das zweite Plattenelement (20) ein Befestigungsloch (21) enthält, durch das das erste Gesenkstück (12) verläuft,
die Gesenkbefestigungsstruktur (1) das erste und zweite Plattenelement (10, 20) durch Gesenkschmieden des Gesenkstücks (12) in einem Zustand, in dem das Gesenkstück (12) durch das Befestigungsloch (21) verlaufen ist, befestigt,
das Gesenkstück (12) umfassend:
einen Schaftabschnitt (13), der vom Plattenhauptkörper (11) in eine Vorsprungrichtung hervorsteht, in die das Gesenkstück (12) hervorsteht, und
ein Paar Haltestücke (17), das so gebildet ist, dass es fortlaufend mit dem Schaftabschnitt (13) an einem vom Plattenhauptkörper (11) weg zeigenden Teil des Schaftabschnitts (13) gebildet ist, und so, dass es vom Schaftabschnitt (13) in beide Überkreuzungsrichtungen, die die Vorsprungrichtung überkreuzen, hervorsteht, und das zweite Plattenelement (20) zwischen sich und dem Plattenhauptkörper (11) hält,
wobei das Paar der Haltestücke (17) so konfiguriert ist, dass eine Endfläche von jedem Haltestück in der Nähe des Plattenhauptkörpers (11) in eine Richtung geneigt ist, die sich schrittweise vom Plattenhauptkörper (11) von einem Ende in der Nähe des Schaftabschnitts (13) zum anderen Ende davon wegbewegt und so gebildet ist, dass ein Maß zwischen dem Plattenhauptkörper (11) und einem Ende der Endfläche in der Nähe des Schaftabschnitts (13) kleiner ist als eine Plattenstärke des zweiten Plattenelements (20) und ein Maß zwischen dem Plattenhauptkörper (11) und dem anderen Ende der Endfläche größer ist als die Plattenstärke des zweiten Plattenelements (20), wobei in einem Zustand, in dem das Gesenkstück (17) durch das Befestigungsloch (17) verlaufen ist, der Schaftabschnitt (13) dazu konfiguriert ist, so um den Schaftabschnitt (13) gewunden zu werden, dass der Schaftabschnitt (13) plastisch verformt wird, wodurch das Gesenkstück (12) in Bezug auf das Befestigungsloch (21) gesenkgeschmiedet wird und das erste Plattenelement (10) und das zweite Plattenelement (20) befestigt werden, **dadurch gekennzeichnet, dass** das Befestigungsloch (21) Folgendesenthält:
ein schlitzähnliches Haltestück-Durchgangsloch (22), durch das das Paar der Haltestücke (17) verlaufen soll; und
ein fortlaufendes Loch (23), das gebildet ist, um fortlaufend mit dem Haltestück-Durchgangsloch (22) zu sein, und das es ermöglicht, dass der Schaftabschnitt (13) sich darin dreht,
wobei ein Rand des fortlaufenden Lochs (23) mit einem Paar Gleitkontaktabschnitten (23a) bereitgestellt ist, um in gleitendem Kontakt mit entsprechenden Endflächen des Paars der Haltestücke (17) zu sein, wenn der Schaftabschnitt (13) gewunden wird,
wobei das Paar der Gleitkontaktabschnitte (23a) so gebildet ist, dass ein Maß zwischen dem Paar der Gleitkontaktabschnitte (23a) ein wenig größer ist als ein Maß des Schaftabschnitts in die Überkreuzungsrichtungen, und
wobei das fortlaufende Loch (23) mit Kontaktabschnitten (25) bereitgestellt ist, wobei jedes davon eine flache Oberfläche ist, um mit Oberflächen der Haltestücke (17) an einer Position in Kontakt zu sein, in der der Schaftabschnitt (13) in einem festgelegten Winkel gewunden wurde.

2. Gesenkbefestigungsstruktur (1) nach Anspruch 1, wobei der Plattenhauptkörper (11) mit einem Paar versenkter Ausschnitte (14) bereitgestellt ist, die durch das Ausschneiden von Abschnitten des Plattenhauptkörpers (11) zu beiden Seiten des Schaftabschnittes (13) gebildet sind.

3. Gesenkbefestigungsstruktur (1) nach Anspruch 1 oder Anspruch 2, wobei
eine Vielzahl an Vorsprungstücken (15), die in dieselbe Richtung hervorstehen wie die Vorsprungrichtung des Gesenkstücks (12), am Plattenhauptkörper (11) gebildet sind, und
eine Vielzahl an Vorsprungstück-Passlöchern (26), in die die Vielzahl der Vorsprungstücke (15) eingepasst sind, am zweiten Plattenelement (20) gebildet sind.

4. Gesenkbefestigungsstruktur (1) nach einem der Ansprüche 1 bis 3, wobei das fortlaufende Loch (23) ein Paar rechteckiger Löcher ist, die relativ zueinander in eine Schlitzerstreckungsrichtung des Haltestück-Durchgangsloch (22) versetzt sind, und so positioniert sind, dass sie um eine Mitte des Haltestück-Durchgangslochs (22) symmetrisch sind, wenn sie in einer Draufsicht betrachtet werden.

5. Bilderzeugungsvorrichtung (30), umfassend die Gesenkbefestigungsstruktur (1) nach einem der Ansprüche 1 bis 4.

## Revendications

1. Structure de fixation par rétreinte (1) comprenant :
un premier élément de plaque (10) ; et
un second élément de plaque (20), dans laquelle
le premier élément de plaque (10) comprend un corps principal de plaque (11) et une pièce de rétreinte en forme de T (12) formée pour faire saillie depuis le corps principal de plaque (11) dans une direction s'étendant le long d'un plan du corps principal de plaque (11),
le second élément de plaque (20) comprend un trou de fixation (21) à travers lequel passe la pièce de rétreinte (12),
la structure de fixation par rétreinte (1) fixe les premier et second éléments de plaque (10, 20) par rétreinte de la pièce de rétreinte (12) dans un état où la pièce de rétreinte (12) est passée à travers le trou de fixation (21),
la pièce de rétreinte (12) comprend :
une partie de tige (13) faisant saillie depuis le corps principal de plaque (11) dans une direction de saillie dans laquelle la pièce de rétreinte (12) fait saillie ; et
une paire de pièces de maintien (17) qui est formée pour être continue avec la partie de tige (13) au niveau d'une partie de la partie de tige (13) éloignée du corps principal de plaque (11) et pour faire saillie depuis la partie de tige (13) dans les deux directions en intersection coupant la direction de saillie, et maintient le second élément de plaque (20) entre le corps principal de plaque (11) et celle-ci,
la paire de pièces de maintien (17) est configurée de sorte qu'une surface d'extrémité de chaque pièce de maintien proche du corps principal de plaque (11) soit inclinée dans une direction consistant à s'éloigner progressivement du corps principal de plaque (11) d'une extrémité proche de la partie de tige (13) à son autre extrémité, et est formée de sorte qu'une dimension entre le corps principal de plaque (11) et une extrémité de la surface d'extrémité proche de la partie de tige (13) soit plus petite qu'une épaisseur de plaque du second élément de plaque (20) et qu'une dimension entre le corps principal de plaque (11) et l'autre extrémité de la surface d'extrémité soit plus grande que l'épaisseur de plaque du second élément de plaque (20), moyennant quoi dans un état où la pièce de rétreinte (17) est passée à travers le trou traversant (21), la partie de tige (13) est configurée pour être tordue autour de la partie de tige (13) de sorte que la partie de tige (13) soit déformée plastiquement, la pièce de rétreinte (12) étant ainsi rétreinte vis-à-vis du trou de fixation (21), et le premier élément de plaque (10) et le second élément de plaque (20) sont fixés, **caractérisée en ce que** le trou de fixation (21) comprend :
un trou traversant de pièce de maintien de type fente (22) à travers lequel la paire de pièces de maintien (17) doit passer ; et
un trou continu (23) qui est formé pour être continu avec le trou traversant de pièce de maintien (22) et permet à la partie de tige (13) de tourner à l'intérieur de celui-ci, un bord du trou continu (23) étant muni d'une paire de parties de contact coulissant (23a) destinée à se trouver en contact coulissant avec des surfaces d'extrémité respectives de la paire de pièces de maintien (17) lorsque la partie de tige (13) est tordue, la paire de parties de contact coulissant (23a) est formée de sorte qu'une dimension entre la paire de parties de contact coulissant (23a) soit légèrement plus grande qu'une dimension de la partie de tige dans les directions en intersection, et
le trou continu (23) est muni de parties de contact (25), chacun étant une surface plate destinée à venir au contact avec des surfaces des pièces de maintien (17) à une position où la partie de tige (13) a été tordue selon un angle prédéterminé.

2. Structure de fixation par rétreinte (1) selon la revendication 1, dans laquelle le corps principal de plaque (11) est muni d'une paire de découpes évidées (14) formée par découpe de parties du corps principal de plaque (11) des deux côtés de la partie de tige (13).

3. Structure de fixation par rétreinte (1) selon la revendication 1 ou la revendication 2, dans laquelle
une pluralité de pièces en saillie (15) faisant saillie dans la même direction que la direction de saillie de la pièce de rétreinte (12) est formée sur le corps principal de plaque (11), et
une pluralité de trous d'adaptation de pièce en saillie (26) dans laquelle la pluralité de pièces en saillie (15) est adaptée, est formée sur le second élément de plaque (20).

4. Structure de fixation par rétreinte (1) selon l'une quelconque des revendications 1 à 3, dans laquelle le trou continu (23) est une paire de trous triangulaires qui sont décalés l'un par rapport à l'autre dans une direction d'extension de fente du trou traversant de pièce de maintien (22) et qui sont positionnés pour être symétriques autour d'un centre du trou traversant de pièce de maintien (22), en vue en plan.

5. Appareil de formation d'image (30) comprenant la structure de fixation par rétreinte (1) selon l'une quelconque des revendications 1 à 4.
